# EUROPÄISCHE PATENTSCHRIFT

(11) **EP 3 524 037 B1**
(45) Veröffentlichungstag und Bekanntmachung des Hinweises auf die Patenterteilung: **14.06.2023**
(21) Anmeldenummer: 17787913.7
(22) Anmeldetag: 20.10.2017
(51) Int. Cl.: H05B 45/375, H02M 3/158

(54) **SYNCHRONER ABWÄRTSWANDLER ZUM BETREIBEN VON EINEM ODER MEHREREN LEUCHTMITTELN, DAZUGEHÖRIGES VERFAHREN UND BETRIEBSGERÄT**
SYNCHRONOUS BUCK CONVERTER FOR OPERATING ONE OR MORE LIGHTING DEVICES, ASSOCIATED METHOD AND OPERATING DEVICE
CONVERTISSEUR ABAISSEUR DE TENSION SYNCHRONE POUR ALIMENTER UNE OU PLUSIEURS MOYENS D'ÉCLAIRAGE ET PROCÉDÉ ET APPAREIL ASSOCIÉS

(30) Priorität: 11.11.2016 DE 102016222162; 02.12.2016 DE 102016223998; 16.12.2016 AT 30716 U
(43) Veröffentlichungstag der Anmeldung: 14.08.2019
(73) Patentinhaber: Tridonic GmbH & Co. KG, 6851 Dornbirn (AT)
(72) Erfinder: LOCHMANN, Frank, 88147 Esseratsweiler (DE); SACCAVINI, Lukas, 6850 Dornbirn (AT)
(74) Vertreter: Rupp, Christian
(86) Internationale Anmeldenummer: PCT/EP2017/076878
(87) Internationale Veröffentlichungsnummer: WO 2018/086848

(56) Entgegenhaltungen:
- DE-A1-102012 007 479
- US-A1- 2006 017 421
- US-A1- 2008 012 540
- US-A1- 2008 224 625
- LI RUQI ET AL: "Small-signal characterization of synchronous buck converters under light load conditions", 2015 IEEE ENERGY CONVERSION CONGRESS AND EXPOSITION (ECCE), IEEE, 20. September 2015 (2015-09-20), Seiten 193-200, XP032800577, DOI: 10.1109/ECCE.2015.7309688 [gefunden am 2015-10-27]
- Jerome Johnson: "Improving Buck Converter Light-Load Efficiency", POWER SUPPLY DESIGN 17, 1 May 2015 (2015-05-01), pages 1-3, XP055824051, Retrieved from the Internet: URL:http://www.power-mag.com/pdf/feature_p df/1447858096_Intersil_Feature_Layout_1.pd f [retrieved on 2021-07-13]

## Beschreibung

Die vorliegende Erfindung bezieht sich auf einen synchronen Abwärtswandler zum Betreiben von einem oder mehreren Leuchtmitteln, ein Verfahren zum Betreiben eines synchronen Abwärtswandlers zum Betreiben von einem oder mehreren Leuchtmitteln und ein Betriebsgerät zum Betreiben von einem oder mehreren Leuchtmitteln. Das eine oder die mehreren Leuchtmittel umfassen z.B. eine oder mehrere Leuchtdioden (LEDs).

Synchrone Abwärtswandler sind allgemein bekannt. So werden etwa in den Druckschriften US 2008/224625 A1, US 2006/017421 A1, US 2008/012540 A1,

LI RUOI ET AL: "Small-signal characterization of synchronous buck converters under light load conditions",2015 IEEE ENERGY CONVERSION CONGRESS AND EXPOSITION (ECCE), IEEE, 20. September 2015 (2015-09-20), Seiten 193-200 und

JEROME JOHNSON: "Improving Buck Converter Light-Load Efficiency",POWER SUPPLY DESIGN 17, 1. Mai 2015 (2015-05-01), Seiten 1-3

(http://www.power-mag.com/pdf/feature_pdf/ 1447858096_Intersil_Feature_Layout_1.pdf) synchrone Abwärtswandler offenbart. Im Vergleich zu einem Standard- oder herkömmlichen Abwärtswandler ist in einem synchronen Abwärtswandler die Diode durch einen Schalter ersetzt, sodass der synchrone Abwärtswandler neben dem primären Schalter einen zweiten Schalter aufweist. Da der synchrone Abwärtswandler aus zwei schaltbaren Schaltern aufgebaut ist, muss der zweite Schalter im Gegentakt zu dem primären bzw. ersten Schalter betätigt werden. Wird der erste Schalter leitend, so öffnet der zweite, und umgekehrt.

Da eine Diode in Durchlassrichtung stets einen Spannungsabfall verursacht, treten an dieser und damit an einem Standard- oder herkömmlichen Abwärtswandler nicht unerhebliche Verluste auf. Synchrone Abwärtswandler hingegen haben deutlich geringere Verluste, weshalb die Ausführung eines Abwärtswandlers als synchronen Abwärtswandlers bzw. als Synchronwandlers den Wirkungsgrad verbessern kann.

Ein weiterer Vorteil des synchronen Abwärtswandlers ist das Fehlen des diskontinuierlichen (lückenden) Betriebs. Bei einem Standard- oder herkömmlichen Abwärtswandler wird bei geringem Mittelwert des Ausgangsstroms der Strom durch die Induktivität periodisch zu null, und die Diode sperrt. In diesem diskontinuierlichen Betriebsbereich hängt die Ausgangsspannung nicht mehr linear von der Eingangsspannung und dem Pulsweitenverhältnis ab, was die Regelung erschwert. Bei einem synchronen Abwärtswandler hingegen steigt der Strom aufgrund der Rückwärtsleitfähigkeit der Schalter nach seinem Nulldurchgang negativ an, Energie fließt von der Ausgangskapazität zurück zum Eingang, wodurch die Linearität und somit leichte Regelbarkeit unabhängig von der Last gegeben sind. Ein weiterer Vorteil dieser Betriebsweise ist, dass der negative Strombereich das zeitliche Mittel des Stroms absenkt.

Obwohl in einem synchronen Abwärtswandler der Strom im zeitlichen Mittel abgesenkt werden kann, sinkt auch die Amplitude des Stroms relativ stark. Es entsteht durch das starke Absinken des Stroms entsteht eine hohe Stromamplitude. Die Schaltfrequenz des synchronen Abwärtswandlers ist dabei verhältnismäßig niedrig.

Auch wenn eine hohe Stromamplitude, wie sie durch das Sinken des Stroms im synchronen Abwärtswandler entsteht, den Vorteil hat, dass sie durch kurzzeitige Bursts im Signal nicht beeinflusst wird, besteht das Problem bei einem synchronen Abwärtswandler, der ein oder mehrere Leuchtmittel betreibt, dass bereits eine geringe zeitliche Abweichung oder Schwankungen beim Ein- und Ausschalten der Schalter aufgrund der hohen Stromamplitude zu einem optisch sichtbaren Flackern des einen oder der mehreren Leuchtmittel (z.B. einer oder mehrere LEDs) führen kann, die über den synchronen Abwärtswandler mit Strom versorgt wird.

Es ist daher die Aufgabe der vorliegenden Erfindung, ein verbessertes Zuführen des Stroms einem oder mehreren Leuchtmitteln zu ermöglichen.

Diese Aufgabe wird erfindungsgemäß durch die Merkmale der unabhängigen Ansprüche gelöst. Die abhängigen Ansprüche geben weitere Ausbildungen der Erfindung an.

Die vorliegende Erfindung beruht insbesondere auf der Idee, die Präsenz der hohen Amplituden in dem synchronen Abwärtswandler durch ein Einführen eines weiteren Betriebsmodus zu verringern, in dem die Amplituden beim Ansteigen und Sinken des Stroms und insbesondere beim Sinken des Stroms verringert sind. Gemäß der vorliegenden Erfindung wird in dem zweiten Betriebsmodus ein Ausschwingen des Stromflusses implementiert.

Gemäß einem Aspekt der vorliegenden Erfindung wird ein Synchroner Abwärtswandler zum Betreiben von einem oder mehreren Leuchtmitteln bereitgestellt, wobei der synchrone Abwärtswandler ausgestaltet ist, in einem ersten Betriebsmodus oder in einem zweiten Betriebsmodus betrieben zu werden, wobei in dem ersten Betriebsmodus des synchronen Abwärtswandlers durch den synchronen Abwärtswandler fließender Strom abwechselnd ansteigt und sinkt und wobei in dem zweiten Betriebsmodus der Stromverlauf des durch den synchronen Abwärtswandler fließenden Stroms über eine vorbestimmte Zeitdauer ausschwingt.

Gemäß einer Ausführungsform beim Sinken des Stroms im ersten Betriebsmodus sinkt der Strom zunächst Richtung Null und fließt anschließend in eine Negativrichtung.

Erfindungsgemäß ist der synchrone Abwärtswandler ausgestaltet, von dem ersten Betriebsmodus in den zweiten Betriebsmodus zu wechseln, wenn der Strom in dem ersten Betriebsmodus ansteigt und Nulllinie erreicht oder wenn der Strom in dem ersten Betriebsmodus ansteigt und einen vorbestimmten Abstand zu der Nulllinie aufweist.

Erfindungsgemäß ist der synchrone Abwärtswandler ausgestaltet, nach dem Ablauf der vorbestimmten Zeitdauer von dem zweiten Betriebsmodus in den ersten Betriebsmodus zu wechseln.

Erfindungsgemäß ist die vorbestimmte Zeitdauer durch eine vorbestimmte Anzahl von Ausschwingzyklen vorbestimmt.

Gemäß einer Ausführungsform steigt nach einem Wechsel von dem zweiten Betriebsmodus in den ersten Betriebsmodus der durch den synchronen Abwärtswandler fließende Strom an.

Erfindungsgemäß weist der synchrone Abwärtswandler einen ersten Schalter und einen zweiten Schalter zum Steuern des Stromflusses des durch den synchronen Abwärtswandler fließenden Stroms auf.

Erfindungsgemäß ist der synchrone Abwärtswandler derart ausgestaltet, dass in dem ersten Betriebsmodus der durch den synchronen Abwärtswandler fließende Strom durch ein Einschalten des ersten Schalters und ein Ausschalten des zweiten Schalters ansteigt und durch ein Ausschalten des ersten Schalters und ein Einschalten des zweiten Schalters sinkt.

Erfindungsgemäß ist der synchrone Abwärtswandler derart ausgestaltet, dass in dem zweiten Betriebsmodus der erste Schalter und der zweite Schalter ausgeschaltet sind.

Gemäß einer Ausführungsform wird der erste Schalter beim Wechsel von dem ersten Betriebsmodus in den zweiten Betriebsmodus Ausgeschaltet.

Gemäß einer Ausführungsform wird der erste Schalter beim Wechsel von dem zweiten Betriebsmodus in den ersten Betriebsmodus eingeschaltet.

Gemäß einer Ausführungsform steigt der durch den synchronen Abwärtsschalter fließende Strom in dem ersten Betriebsmodus bis zu einem ersten Grenzwert an und/oder sinkt bis zu einem zweiten Grenzwert.

Gemäß einer Ausführungsform steigt der durch den synchronen Abwärtsschalter fließende Strom in dem ersten Betriebsmodus bis zum Ablauf einer ersten Zeitperiode an und/oder sinkt bis zum Ablauf einer zweiten Zeitperiode.

Gemäß einer Ausführungsform ist der synchrone Abwärtswandler mit dem einen oder mit den mehreren Leuchtmitteln verbindbar ausgestaltet und ist beim Vorliegen einer Verbindung zu dem einen oder zu den mehreren Leuchtmitteln ausgestaltet, das eine oder die mehreren Leuchtmittel mit dem durch den synchronen Abwärtswandler fließenden Strom zu versorgen.

Gemäß einer Ausführungsform umfassen das eine oder die mehreren Leuchtmittel eine oder mehrere Leuchtioden, LEDs.

Gemäß einem Aspekt der vorliegenden Erfindung wird ein Verfahren zum Betreiben eines synchronen Abwärtswandlers bereitgestellt, der zum Betreiben von einem oder mehreren Leuchtmitteln ausgestaltet ist, wobei der synchrone Abwärtswandler einen ersten Schalter und einen zweiten Schalter zum Steuern des Stromflusses des durch den synchronen Abwärtswandler fließenden Stroms aufweist, wobei das Verfahren aufweist ein Betreiben des synchronen Abwärtswandlers in einem ersten Betriebsmodus oder in einem zweiten Betriebsmodus, wobei in dem ersten Betriebsmodus des synchronen Abwärtswandlers durch den synchronen Abwärtswandler fließender Strom abwechselnd ansteigt und sinkt, wobei in dem ersten Betriebsmodus der durch den synchronen Abwärtswandler fließende Strom durch ein Einschalten des ersten Schalters und ein Ausschalten des zweiten Schalters ansteigt und durch ein Ausschalten des ersten Schalters und ein Einschalten des zweiten Schalters sinkt, und wobei in dem zweiten Betriebsmodus der Stromverlauf des durch den synchronen Abwärtswandler fließenden Stroms über eine vorbestimmte Zeitdauer ausschwingt, wobei in dem zweiten Betriebsmodus der erste Schalter und der zweite Schalter ausgeschaltet sind, ein Wechseln des synchronen Abwärtswandlers von dem ersten Betriebsmodus in den zweiten Betriebsmodus, wenn der Strom in dem ersten Betriebsmodus ansteigt und Nulllinie erreicht oder wenn der Strom in dem ersten Betriebsmodus ansteigt und einen vorbestimmten Abstand zu der Nulllinie aufweist, und ein Wechseln des synchronen Abwärtswandlers von dem zweiten Betriebsmodus in den ersten Betriebsmodus nach dem Ablauf der vorbestimmten Zeitdauer, wobei die vorbestimmte Zeitdauer durch eine vorbestimmte Anzahl von Ausschwingzyklen vorbestimmt ist.

Gemäß einer Ausführungsform weist das Betriebsgerät einen synchronen Abwärtswandler zum Betreiben von dem einem oder den mehreren Leuchtmitteln auf, und der synchrone Abwärtswandler ist ein synchroner Abwärtswandler wie oben angegeben und/oder wie im Nachfolgenden detaillierter dargestellt.

Gemäß einer Ausführungsform weist das Betriebsgerät eine Steuerung auf, die zum Ansteuern des synchronen Abwärtswandlers ausgestaltet ist.

Gemäß einer Ausführungsform steuert die Steuerung den Betrieb des synchronen Abwärtswandlers in dem ersten Betriebsmodus und in dem zweiten Betriebsmodus, einen Wechsel des Betriebs des synchronen Abwärtswandlers von dem ersten Betriebsmodus in den zweiten Betriebsmodus und einen Wechsel des Betriebs des synchronen Abwärtswandlers von dem zweiten Betriebsmodus in den ersten Betriebsmodus an.

Durch die vorliegende Erfindung wird die Höhe der Stromamplituden im Schnitt reduziert. Dadurch wird das Flackern an Leuchtmitteln wie z.B. LEDs, welches optisch sichtbar ist (insbesondere bei niedrigen Dimm-Werten), vermieden oder zumindest deutlich reduziert. Auf diese Weise wird ein verbessertes Zuführen des Stroms einem oder mehreren Leuchtmitteln durch einen synchronen Abwärtswandler verwirklicht, da der Strom einen stabileren Wechsel der Strompegel aufweist.

Weitere Merkmale, Vorteile und Eigenschaften der vorliegenden Erfindung sollen nunmehr anhand der Figuren der begleitenden Zeichnungen und der detaillierten Beschreibung von Ausführungsbeispielen erläutert werden. Hierbei zeigt
- Fig. 1: eine Ausgestaltung eines Betriebsgeräts zum Betreiben von Leuchtmitteln gemäß einer Ausführungsform der vorliegenden Erfindung,
- Fig. 2: einen beispielhaften Stromverlauf durch einen synchronen Abwärtswandler in zwei Betriebsmodi des synchronen Abwärtswandlers gemäß einer Ausführungsform der vorliegenden Erfindung,

Im Nachfolgenden werden Komponenten mit gleichen oder ähnlichen Funktionen in den Figuren mit gleichen Bezugszeichen bezeichnet. Darüber hinaus ist darauf hinzuweisen, dass die hierin erläuterten Ausführungsformen mit einander kombinierbar sind, es sei denn, eine Kombination ist explizit ausgeschlossen.

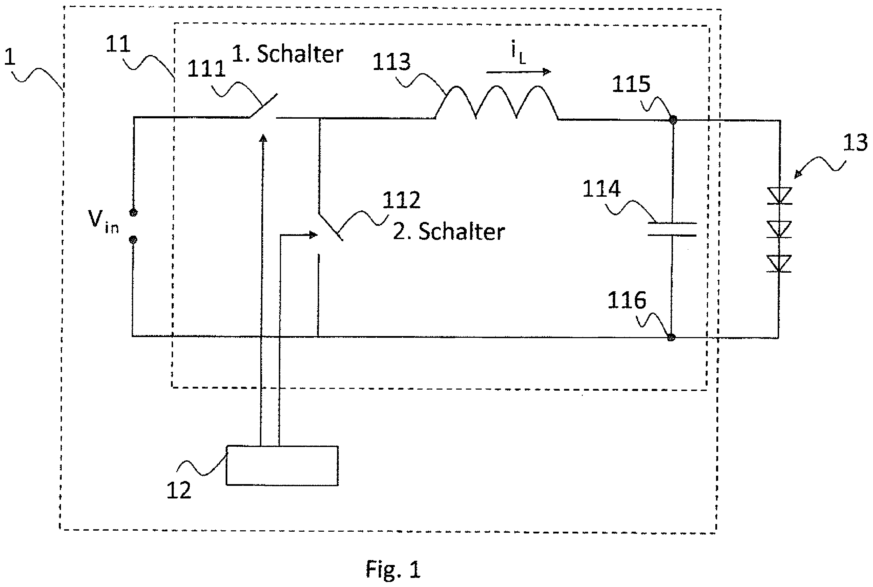

Fig. 1 zeigt eine beispielhafte Ausgestaltung eines Betriebsgeräts 1 zum Betreiben von einem oder mehreren Leuchtmitteln 13 gemäß einer Ausführungsform der vorliegenden Erfindung.

Das eine oder die mehreren Leuchtmittel umfassen gemäß einer Ausführungsform eine oder mehrere Leuchtdioden (LEDs). Die LEDs können verschieden ausgestaltet sein, und die vorliegende Erfindung ist auf keine bestimmte Ausgestaltung der LEDs beschränkt. Gemäß einer Ausführungsform umfassen die LEDs anorganische und/oder organische LEDs. Auch die Anordnung der LEDs ist auf verschiedene Weisen gestaltbar. So sind die LEDs gemäß einer Ausführungsform in Serie geschaltet, während gemäß einer weiteren Ausführungsform die LEDs parallel geschaltet sind. Gemäß einer weiteren Ausführungsform sind die LEDs in komplexeren Anordnungen verschaltet, beispielsweise in mehreren zueinander parallel geschalteten Reihenschaltungen. In Fig. 1 sind beispielhaft drei Leichtmittel, z.B. LEDs 13 dargestellt. Die vorliegende Erfindung ist allerdings nicht auf dieses Beispiel beschränkt und erlaubt das Verwenden einer beliebigen Anzahl von Leuchtmitteln wie z.B. LEDs 13, d.h. das Verwenden mindestens eines Leuchtmittels (z.B. mindestens einer LED).

Das Betriebsgerät 1 bzw. die Betriebsschaltung 1 dient dem Betrieb des eines oder der mehreren Leuchtmittel 13 (z.B. LEDs). Insbesondere dient das Betriebsgerät 1 der Versorgung des eines oder der mehreren Leuchtmittel 13 wie z.B. LEDs mit Strom. Dem Betriebsgerät 1 wird eine Versorgungsspannung Vᵢₙ zugeführt. Die Versorgungsspannung Vᵢₙ ist beispielsweise eine Gleichspannung oder eine gleichgerichtete Wechselspannung. Gemäß einer Ausführungsform umfasst das Betriebsgerät eine Leistungsfaktorkorrekturschaltung (nicht gezeigt), welche die Versorgungsspannung Vᵢₙ bereitstellt.

Das Betriebsgerät 1 bzw. die Betriebsschaltung 1 weist einen synchronen Abwärtswandler 11 (auch als "Tiefstellregler", "Abwärtsregler", "Buck Converter" oder "Step Down-Converter" bekannt) als Konverter auf. Der Abwärtswandler 11 senkt die Spannung von dem Eingang bis zum Ausgang des Abwärtsreglers 11. Der Strom wird von dem Eingang bis zum Ausgang des Abwärtsreglers 11 erhöht.

Der synchrone Abwärtswandler 11 weist einen ersten Schalter 111 und einen zweiten Schalter 112 auf, wobei der zweite Schalter 112 die Diode des herkömmlichen oder Standard-Abwärtswandlers ersetzt. Der erste und der zweite Schalter 111, 112 sind steuerbar. Gemäß weiterer Ausführungsformen, sind der erste und/oder der zweite Schalter 111, 112 als Leistungsschalter, Feldeffekttransistor, Bipolartransistor oder Transistor mit isolierter Gateelektrode ausgestaltet. Die vorliegende Erfindung erlaubt verschiedene geeignete Ausgestaltungsformen des ersten und des zweiten Schalters 111, 112 des synchronen Abwärtswandlers 11. Durch das Schalten des ersten und des zweiten Schalters 111, 112 wird über den synchronen Abwärtswandler 11 Strom i_{L} von der Versorgungsspannung Vᵢₙ zu dem wenigstens einen Leuchtmittel 13 (z.B. LED) transferiert. Der synchrone Abwärtswandler 11 weist Energiespeicher auf: eine Spule 113 und ggf. einen Kondensator 114, welche die Versorgung des wenigstens eines Leuchtmittels 13 (z.B. LED) mit Strom i_{L} in den Phasen des Betriebs des synchronen Abwärtswandlers 11 sicherstellen, in denen der erste Schalter 111 eingeschaltet bzw. geöffnet ist.

Üblicher Weise fließt der Strom i_{L} im eingeschalteten Zustand des ersten Schalters 111 durch das wenigstens eine Leuchtmittel 13 (z.B. LED) und durch die Spule 113, die dadurch magnetisiert wird. Die Spule 113 wird dabei mit Energie geladen. Der zweite Schalter 112 ist üblicher Weise in diesem Zustand ausgeschaltet. Nach dem Ausschalten des ersten Schalters 111 wird der zweite Schalter 112 eingeschaltet, und die Spule 113 treibt den durch sie fließenden Strom i_{L} weiter durch das wenigstens eine Leuchtmittel (z.B. LED) 13 und den zweiten Schalter 112. Die im Magnetfeld der Spule 113 gespeicherte Energie entlädt sich. Parallel dazu kann am Beginn des Einschaltens des ersten Schalters 111 der Kondensator 114 geladen werden. Während der Ausschaltphase des ersten Schalters 111, kann sich der Kondensator 114 entladen und trägt zum Stromfluss durch das wenigstens eine Leuchtmittel 13 (z.B. LED) bei. Bei geeigneter Dimensionierung des Kondensators 114 kann dies zu einer Glättung des Stroms durch das wenigstens eine Leuchtmittel 13 (z.B. LED) führen.

In der Ausführungsform der Fig. 1 sind der erste Schalter 111 und die Spule 113 in Reihe zwischen dem Eingang und den Ausgang des synchronen Abwärtswandlers 11 geschaltet. Wenn das wenigstens eine Leuchtmittel 13 (z.B. LED) mit dem synchronen Abwärtswandler 11 verbunden ist, sind der erste Schalter 111, die Spule 113 und das wenigstens eine Leuchtmittel 13 (z.B. LED) gemäß der vorliegenden Ausführungsform in Reihe geschaltet. Der Kondensator 114 ist parallel zu dem wenigstens einen Leuchtmittel 13 (z.B. LED) und der Spule 113 geschaltet (wenn der zweite Schalter 112 geschlossen ist). Der Kondensator 114 ist gemäß der vorliegenden Ausführungsform parallel zu den Ausgangsanschlüssen 115, 116 geschaltet, so dass der Kondensator 114 parallel zu dem wenigstens einen Leuchtmittel (z.B. LED) geschaltet ist. Der Kondensator 114 ist ein optionales Element des synchronen Abwärtswandlers 11. Der Kondensator 114 kann durch die Zuleitungsleitung zum Leuchtmittel 13 gebildet werden oder kann auf einem LED-Modul integriert sein.

Das Betriebsgerät 1 weist darüber hinaus eine Steuerung bzw. eine Steuerschaltung 12 auf, welche zum Ansteuern des synchronen Abwärtswandlers 11 ausgestaltet ist. Insbesondere ist die Steuerung 12 ausgestaltet, den ersten und den zweiten Schalter 111, 112 des synchronen Abwärtswandlers 11 anzusteuern, was in Fig. 1 durch die von der Steuerung 12 zu den Schaltern 111, 112 führenden Pfeilen dargestellt ist.

Gemäß einer Ausführungsform betreibt die Steuerung 12 den ersten und den zweiten Schalter 111, 112 des synchronen Abwärtswandlers 11 in einem gepulsten Betrieb, so dass jeweils ein Ausgangsstrom in Form von Pulspaketen bereitgestellt wird. Beispielsweise werden in dieser Ausführungsform bei kleineren Dimm-Levels Pulspakete erzeugt, um die gemittelte Stromstärke und somit die vom Auge wahrgenommene Helligkeit einzustellen.

Die vorliegende Erfindung erlaubt verschiedene Ausgestaltungen der Steuerung 12. So z.B. ist die Steuerung 12 gemäß einer Ausführungsform eine integrierte Halbleiterschaltung oder umfasst eine integrierte Halbleiterschaltung. Gemäß weiterer Ausführungsformen ist die Steuerung 12 als ein Prozessor, ein Mikroprozessor, ein Controller, ein Mikrocontroller, eine anwendungsspezifische Spezialschaltung (ASIC, "Application Specific Integrated Circuit") oder eine Kombination der genannten Einheiten ausgestaltet.

Der synchrone Abwärtswandler 11 ist ausgestaltet in einem ersten Betriebsmodus oder in einem zweiten Betriebsmodus betrieben zu werden. In dem ersten Betriebsmodus des synchronen Abwärtswandlers 11 steigt und sinkt der durch den synchronen Abwärtswandler 11 fließende Strom i_{L}. Das Sinken und das Ansteigen des Stroms i_{L} geschehen abwechselnd. Gemäß einer Ausführungsform sinkt der Strom i_{L} beim Sinken zunächst Richtung Null und fließt anschließend in eine Negativrichtung. Wenn der Strom i_{L} in dem ersten Betriebsmodus ansteigt und die Nulllinie erreicht oder wenn der Strom i_{L} in dem ersten Betriebsmodus ansteigt und einen vorbestimmten Abstand zu der Nulllinie aufweist, wird ein Wechsel von dem ersten Betriebsmodus in den zweiten Betriebsmodus vorgenommen. Gemäß einer weiteren Ausführungsform erfolgt dies nach einer vorbestimmten Anzahl des Sinkens oder Ansteigens des Stroms i_{L} in dem ersten Betriebsmodus.

In dem zweiten Betriebsmodus schwingt der Stromverlauf des durch den synchronen Abwärtswandler 11 fließenden Stroms i_{L} über eine vorbestimmte Zeitdauer aus.

Erfindungsgemäß ist diese vorbestimmte Zeitdauer durch eine vorbestimmte Anzahl von Ausschwingzyklen vorbestimmt. Nach dem Ablauf der vorbestimmten Zeitdauer wechselt der Betrieb des synchronen Abwärtswandlers 11 von dem zweiten Betriebsmodus in den ersten Betriebsmodus.

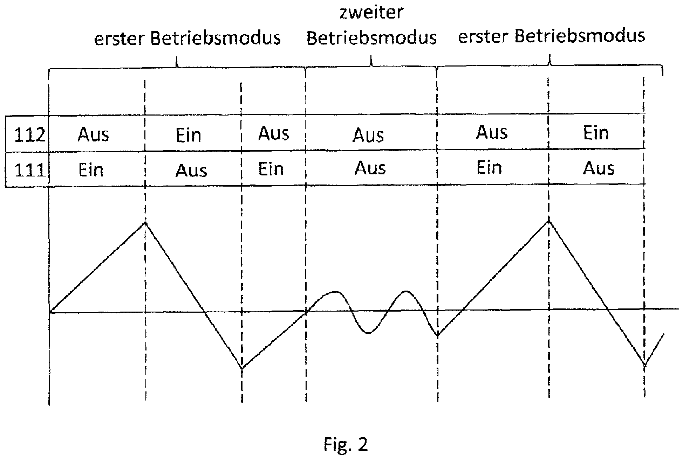

Der erfindungsgemäße Betrieb des synchronen Abwärtswandlers 11 wird in Fig. 2 durch das Veranschaulichen der verschiedenen Stromverläufe in den zwei Betriebsmodi des synchronen Abwärtswandlers 11 gezeigt.

Fig. 2 zeigt einen beispielhaften Stromverlauf durch den synchronen Abwärtswandler 11 in den zwei Betriebsmodi des synchronen Abwärtswandlers 11 gemäß einer Ausführungsform der vorliegenden Erfindung. Es ist anzumerken, dass die Anzahl und Dauer der verschiedenen Phasen in den jeweiligen Betriebsmodi lediglich beispielhaft ist und dem besseren Verständnis der vorliegenden Erfindung dienen.

In Fig. 2 wird durch die horizontale Achse der zeitliche Ablauf dargestellt und durch die vertikale Achse die Höhe oder der Pegel des Stroms angezeigt. Die horizontale Achse schneidet die vertikale Achse in der Ausführungsform der Fig. 2 an einem Nullpunkt. Damit entspricht die horizontale Achse in Fig. 2 auch einer Nulllinie.

Der Stromverlauf im ersten Betriebsmodus ist in Fig. 2 beispielhaft in drei Phasen unterteilt, wobei die vorliegende Erfindung auf diese beispielhafte Einteilung nicht beschränkt ist. Die erste und die zweite Phase des ersten Betriebsmodus zeigen das abwechselnde Ansteigen und Sinken des durch den synchronen Abwärtswandler 11 fließenden Stroms i_{L}.

In der ersten Phase des ersten Betriebsmodus steigt der durch den synchronen Abwärtswandler 11 fließende Strom i_{L} an. Dies wird durch das Einschalten des ersten Schalters 111 und durch das Ausschalten des zweiten Schalters 112 erreicht. Das Einschalten und das Ausschalten der Schalter 111, 112 wird entsprechend durch die Steuerung 12 angesteuert. Gemäß einer Ausführungsform steigt der Strom i_{L} solange an, bis ein oberer Grenzwert bzw. Schwellenwert, auch als obere Abschaltschwelle bezeichnet, erreicht worden ist. Gemäß einer anderen Ausführungsform steigt der Strom i_{τ,} solange an, bis eine vorbestimmte Zeitperiode abgelaufen ist. Wurde der obere Grenzwert erreicht oder ist die vorbestimmte Zeitperiode abgelaufen, wird der Fluss des Stroms i_{L} abgesenkt (siehe die zweite Periode des ersten Betriebsmodus in Fig. 2). Dies wird gemäß der vorliegenden Ausführungsform dadurch erreicht, dass der erste Schalter 111 ausgeschaltet wird und der zweite Schalter 112 eingeschaltet wird.

Wie bereits erwähnt, erfolgt das Ansteuern des ersten und des zweiten Schalters 111, 112 gemäß der vorliegenden Ausführungsform durch die Steuerung 12. Im Hinblick auf den ersten Betriebsmodus ist die Steuerung 12 ausgestaltet zu prüfen, ob der ansteigende Strom i_{L} den oberen Grenzwert erreicht hat oder ob die vorbestimmte Zeitperiode abgelaufen ist. Ist der obere Grenzwert durch den ansteigenden Strom i_{L} erreicht worden oder ist die vorbestimmte Zeitperiode abgelaufen, steuert die Steuerung 12 den synchronen Abwärtswandler 11 an, die Stromrichtung in dem ersten Betriebsmodus zu wechseln. Z.B. steuert die Steuerung 12 den ersten Schalter 111 so an, dass der erste Schalter 111 eingeschaltet wird, und den zweiten Schalter 112 so an, dass der zweite Schalter 112 ausgeschaltet wird.

In der zweiten Phase des ersten Betriebsmodus sinkt der durch den synchronen Abwärtswandler 11 fließende Strom i_{L}. Dies wird durch das Ausschalten des ersten Schalters 111 und durch das Einschalten des zweiten Schalters 112 erreicht. Wie erläutert, wird das Einschalten und das Ausschalten der Schalter 111, 112 durch die Steuerung 12 angesteuert. Gemäß einer Ausführungsform sinkt der Strom i_{L} solange, bis ein unterer Grenzwert bzw. Schwellenwert, auch als untere Abschaltschwelle bezeichnet, erreicht worden ist. Gemäß einer anderen Ausführungsform sinkt der Strom i_{L} solange, bis eine vorbestimmte Zeitperiode abgelaufen ist. Wurde der untere Grenzwert erreicht oder ist die vorbestimmte Zeitperiode abgelaufen, wird der Fluss des Stroms i_{τ,} zum Ansteigen gebracht (siehe die dritte Periode des ersten Betriebsmodus in Fig. 2). Dies wird gemäß der vorliegenden Ausführungsform dadurch erreicht, dass der erste Schalter 111 eingeschaltet wird und der zweite Schalter 112 ausgeschaltet wird.

Wie bereits erwähnt, erfolgt das Ansteuern des ersten und des zweiten Schalters 111, 112 gemäß der vorliegenden Ausführungsform durch die Steuerung 12. Im Hinblick auf den ersten Betriebsmodus und auf den sinkenden Stromverlauf ist die Steuerung 12 ausgestaltet zu prüfen, ob der sinkende Strom i_{L} den unteren Grenzwert erreicht hat oder ob die vorbestimmte Zeitperiode abgelaufen ist. Ist der untere Grenzwert durch den sinkenden Strom i_{L} erreicht worden oder ist die vorbestimmte Zeitperiode abgelaufen, steuert die Steuerung 12 den synchronen Abwärtswandler 11 an, die Stromrichtung in dem ersten Betriebsmodus zu wechseln. Z.B. steuert die Steuerung 12 den ersten Schalter 111 so an, dass der erste Schalter 111 eingeschaltet wird, und den zweiten Schalter 112 so an, dass der zweite Schalter 112 ausgeschaltet wird.

Das Ansteigen und das Sinken des Stroms i_{L}, wie durch die erste Phase und die zweite Phase des ersten Betriebsmodus in Fig. 2 veranschaulicht, kann eine vorbestimmte Anzahl an Malen (z.B. N Male, wobei N ein positiver Integer ist) wiederholt werden. Wenn die vorbestimmte Anzahl an wiederholtem Ansteigen und Sinken des Stroms im ersten Betriebsmodus erreicht wurde, wird der Wechsel von dem ersten Betriebsmodus in den zweiten Betriebsmodus vorgenommen. Dies kann ebenfalls durch die Ansteuerung 12 erfolgen. Die Ansteuerung 12 prüft, z.B. ob die vorbestimmte Anzahl an wiederholtem Ansteigen und Sinken des Stroms im ersten Betriebsmodus erreicht wurde, und veranlasst beim Erreichen der vorbestimmten Anzahl den Wechsel von dem ersten Betriebsmodus in den zweiten Betriebsmodus.

Von dem ersten Betriebsmodus in den zweiten Betriebsmodus wird gewechselt, wenn der Strom in dem ersten Betriebsmodus ansteigt und die Nulllinie erreicht oder wenn der Strom in dem ersten Betriebsmodus ansteigt und einen vorbestimmten Abstand zu der Nulllinie aufweist. Dies kann ebenfalls durch die Steuerung 12 erfasst werden. Ist die Nulllinie erreicht oder weist der ansteigende Strom einen vorbestimmten Abstand zu der Nulllinie auf, wird in den zweiten Betriebsmodus gewechselt (siehe in Fig. 2 den Übergang von der dritten Phase des ersten Betriebsmodus in den zweiten Betriebsmodus). In dem zweiten Betriebsmodus schwingt der Stromverlauf des durch den synchronen Abwärtswandler 11 fließenden Stroms über eine vorbestimmte Zeitdauer aus. Damit der synchrone Abwärtswandler 11 in dem zweiten Betriebsmodus betrieben wird, wird gemäß der vorliegenden Ausführungsform der erste Schalter 111 ausgeschaltet und der zweite Schalter 112 wird ausgeschaltet oder ausgeschaltet gelassen. Die entsprechende Ansteuerung der Schalter 111, 112 wird z.B. durch die Steuerung 12 vorgenommen. Ferner ist die Steuerung 12 gemäß der vorliegenden Ausführungsform ausgestaltet zu prüfen, ob die vorbestimmte Zeitdauer abgelaufen ist. Die vorbestimmte Zeitdauer ist z.B. durch eine vorbestimmte Anzahl von Ausschwingzyklen vorbestimmt. Ist die vorbestimmte Zeitdauer abgelaufen (z.B. ist die vorbestimmte Anzahl von Ausschwingzyklen erreicht), was ebenfalls durch die Steuerung 12 feststellbar ist, wird ein Wechsel von dem zweiten Betriebsmodus in den ersten Betriebsmodus vorgenommen. Dies ist gemäß der vorliegenden Ausführungsform ebenfalls durch die Steuerung 12 steuerbar.

Um in den Wechsel von dem ersten Betriebsmodus in den zweiten Betriebsmodus zu vollziehen, wird gemäß der vorliegenden Ausführungsform der erste Schalter 111 eingeschaltet, während der zweite Schalter 112 ausgeschaltet wird oder ausgeschaltet bleibt. Die entsprechende Ansteuerung der Schalter 111, 112 erfolgt gemäß der vorliegenden Ausführungsform durch die Steuerung 12.

Der weitere Verlauf des ersten Betriebsmodus und der anschließende Wechsel von dem ersten Betriebsmodus in den zweiten Betriebsmodus und zurück werden weiterhin wie oben erörtert vorgenommen.

Der erste Betriebsmodus des synchronen Abwärtswandlers 11 ist gemäß einer Ausführungsform ein synchroner Grenzwertmodus, auch als "synchronous borderleine mode" bezeichnet.

Gemäß einer weiteren Ausführungsform der vorliegenden Erfindung ist der erste Schalter 111 in der Phase des ersten Betriebsmodus, in der der Wechsel von dem ersten Betriebsmodus in den zweiten Betriebsmodus erfolgen wird (siehe in Fig. 2 die dritte Phase des ersten Betriebsmodus mit eingeschalteten ersten Schalter 111 und ausgeschalteten zweiten Schalter 112) eingeschaltet. Bleibt der erste Schalter 111 geöffnet, wird der negative Stromfluss (mit dem Abnehmen der Amplitude in der dritten Phase des ersten Betriebsmodus) über eine Body-Diode des Schalters 111 übernommen, wenn der Schalter 111 als ein Feldeffekttransistor (FET) ausgestaltet ist.

Gemäß einer Ausführungsform wird das Betreiben des synchronen Abwärtswandlers in den zwei Betriebsmodi bei niedrigen Dimm-Werten für die eine oder mehreren LEDs (z.B. eine LED-Strecke) verwendet, da in diesem Bereich die Helligkeitsschwankungen besonders auffällig sind. Bei niedrigen Dimm-Werten reagiert das Auge oft besonders sensitiv auf Helligkeitsschwankungen. Ferner ist die bei einer Veränderung um eine Taktrate entsprechende relative Helligkeitsänderung bei niedrigen Dimm-Werten oft größer als bei höheren Dimm-Werten.

Wie vorstehend dargestellt, betrifft die vorliegende Erfindung einen synchronen Abwärtswandler 11 gemäß Anspruch 1.

Ferner betrifft die Erfindung ein entsprechendes Verfahren gemäß Anspruch 9 zum Betreiben von einem oder mehreren Leuchtmitteln 13 und ein Betriebsgerät 1, gemäß Anspruch 10, das den synchronen Abwärtswandler 11 aufweist und zum Betreiben von dem einen oder von den mehreren Leuchtmitteln 13 ausgestaltet ist.

### Liste der Referenzzeichen

- 1: Betriebsgerät
- 11: Synchroner Abwärtswandler
- 111: erster Schalter
- 112: zweiter Schalter
- 113: Spule
- 114: Kondensator
- 115: Ausgangsanschluss
- 116: Ausgangsanschluss
- 12: Steuerung
- 13: ein oder mehrere Leuchtmittel (z.B. LEDs)

## Patentansprüche

1. Synchroner Abwärtswandler (11) zum Betreiben von einem oder mehreren Leuchtmitteln (13), wobei der synchrone Abwärtswandler (11) einen ersten Schalter (111) und einen zweiten Schalter (112) zum Steuern des Stromflusses des durch den synchronen Abwärtswandler (11) fließenden Stroms aufweist, wobei der synchrone Abwärtswandler (11) ausgestaltet ist, in einem ersten Betriebsmodus oder in einem zweiten Betriebsmodus betrieben zu werden, wobei in dem ersten Betriebsmodus des synchronen Abwärtswandlers (11) durch den synchronen Abwärtswandler (11) fließender Strom abwechselnd ansteigt und sinkt, wobei der synchrone Abwärtswandler (11) derart ausgestaltet ist, dass in dem ersten Betriebsmodus der durch den synchronen Abwärtswandler (11) fließende Strom durch ein Einschalten des ersten Schalters (111) und ein Ausschalten des zweiten Schalters (112) ansteigt und durch ein Ausschalten des ersten Schalters (111) und ein Einschalten des zweiten Schalters (112) sinkt, und wobei in dem zweiten Betriebsmodus der Stromverlauf des durch den synchronen Abwärtswandler (11) fließenden Stroms über eine vorbestimmte Zeitdauer ausschwingt,
wobei der synchrone Abwärtswandler (11) derart ausgestaltet ist, dass in dem zweiten Betriebsmodus der erste Schalter (111) und der zweite Schalter (112) ausgeschaltet sind,
wobei der synchrone Abwärtswandler (11) ausgestaltet ist, nach dem Ablauf der vorbestimmten Zeitdauer von dem zweiten Betriebsmodus in den ersten Betriebsmodus zu wechseln
**dadurch gekennzeichnet, dass**
der synchrone Abwärtswandler (11) ausgestaltet ist, von dem ersten Betriebsmodus in den zweiten Betriebsmodus zu wechseln, wenn der Strom in dem ersten Betriebsmodus ansteigt und Nulllinie erreicht oder wenn der Strom in dem ersten Betriebsmodus ansteigt und einen vorbestimmten Abstand zu der Nulllinie aufweist, und
weiter **dadurch gekennzeichnet, dass**
die vorbestimmte Zeitdauer durch eine vorbestimmte Anzahl von Ausschwingzyklen vorbestimmt ist.

2. Synchroner Abwärtswandler (11) nach Anspruch 1, wobei im ersten Betriebsmodus beim Sinken des Stroms der Strom zunächst Richtung Null sinkt und anschließend in eine Negativrichtung fließt.

3. Synchroner Abwärtswandler (11) nach einem der vorstehenden Ansprüche, wobei nach einem Wechsel von dem zweiten Betriebsmodus in den ersten Betriebsmodus der durch den synchronen Abwärtswandler (11) fließende Strom ansteigt.

4. Synchroner Abwärtswandler (11) nach einem der vorstehenden Ansprüche, wobei beim Wechsel von dem ersten Betriebsmodus in den zweiten Betriebsmodus der erste Schalter (111) ausgeschaltet wird.

5. Synchroner Abwärtswandler (11) nach einem der vorstehenden Ansprüche, wobei beim Wechsel von dem zweiten Betriebsmodus in den ersten Betriebsmodus der erste Schalter (111) eingeschaltet wird.

6. Synchroner Abwärtswandler (11) nach einem der vorstehenden Ansprüche, wobei der durch den synchronen Abwärtswandler (11) fließende Strom in dem ersten Betriebsmodus bis zu einem ersten Grenzwert ansteigt und/oder bis zu einem zweiten Grenzwert sinkt, oder wobei der durch den synchronen Abwärtswandler (11) fließende Strom in dem ersten Betriebsmodus bis zum Ablauf einer ersten Zeitperiode ansteigt und/oder bis zum Ablauf einer zweiten Zeitperiode sinkt.

7. Synchroner Abwärtswandler (11) nach einem der vorstehenden Ansprüche, wobei der synchrone Abwärtswandler (11) mit dem einen oder mit den mehreren Leuchtmitteln (13) verbindbar ausgestaltet ist und beim Vorliegen einer Verbindung zu dem einen oder zu den mehreren Leuchtmitteln (13) ausgestaltet ist, das eine oder die mehreren Leuchtmittel (13) mit dem durch den synchronen Abwärtswandler (11) fließenden Strom zu versorgen.

8. Synchroner Abwärtswandler (11) nach einem der vorstehenden Ansprüche, wobei das eine oder die mehreren Leuchtmittel (13) eine oder mehrere Leuchtioden, LEDs, umfassen.

9. Verfahren zum Betreiben eines synchronen Abwärtswandlers (11), der zum Betreiben von einem oder mehreren Leuchtmitteln (13) ausgestaltet ist,
wobei der synchrone Abwärtswandler (11) einen ersten Schalter (111) und einen zweiten Schalter (112) zum Steuern des Stromflusses des durch den synchronen Abwärtswandler (11) fließenden Stroms aufweist, wobei das Verfahren aufweist
ein Betreiben des synchronen Abwärtswandlers (11) in einem ersten Betriebsmodus oder in einem zweiten Betriebsmodus, wobei in dem ersten Betriebsmodus des synchronen Abwärtswandlers (11) durch den synchronen Abwärtswandler (11) fließender Strom abwechselnd ansteigt und sinkt, wobei in dem ersten Betriebsmodus der durch den synchronen Abwärtswandler (11) fließende Strom durch ein Einschalten des ersten Schalters (111) und ein Ausschalten des zweiten Schalters (112) ansteigt und durch ein Ausschalten des ersten Schalters (111) und ein Einschalten des zweiten Schalters (112) sinkt, und wobei in dem zweiten Betriebsmodus der Stromverlauf des durch den synchronen Abwärtswandler (11) fließenden Stroms über eine vorbestimmte Zeitdauer ausschwingt, wobei in dem zweiten Betriebsmodus der erste Schalter (111) und der zweite Schalter (112) ausgeschaltet sind,
ein Wechseln des synchronen Abwärtswandlers (11) von dem zweiten Betriebsmodus in den ersten Betriebsmodus nach dem Ablauf der vorbestimmten Zeitdauer
**gekennzeichnet durch**
ein Wechseln des synchronen Abwärtswandlers (11) von dem ersten Betriebsmodus in den zweiten Betriebsmodus, wenn der Strom in dem ersten Betriebsmodus ansteigt und Nulllinie erreicht oder wenn der Strom in dem ersten Betriebsmodus ansteigt und einen vorbestimmten Abstand zu der Nulllinie aufweist, und
und weiter **dadurch gekennzeichnet, dass** die vorbestimmte Zeitdauer durch eine vorbestimmte Anzahl von Ausschwingzyklen vorbestimmt ist.

10. Betriebsgerät (1) zum Betreiben von einem oder mehreren Leuchtmitteln (13), wobei das Betriebsgerät (1) einen synchronen Abwärtswandler (11) zum Betreiben von dem einem oder den mehreren Leuchtmitteln (13) aufweist und wobei der synchrone Abwärtswandler (11) ein synchroner Abwärtswandler (11) nach einem der Ansprüche 1 bis 8 ist, wobei vorzugsweise das Betriebsgerät (1) eine Steuerung (12) aufweist, die zum Ansteuern des synchronen Abwärtswandlers (11) ausgestaltet ist.

11. Betriebsgerät (1) nach Anspruch 10, wobei die Steuerung (12) den Betrieb des synchronen Abwärtswandlers (11) in dem ersten Betriebsmodus und in dem zweiten Betriebsmodus, einen Wechsel des Betriebs des synchronen Abwärtswandlers (11) von dem ersten Betriebsmodus in den zweiten Betriebsmodus und einen Wechsel des Betriebs des synchronen Abwärtswandlers (11) von dem zweiten Betriebsmodus in den ersten Betriebsmodus ansteuert.

## Claims

1. A synchronous step-down converter (11) for operating one or more lighting means (13), the synchronous step-down converter (11) having a first switch (111) and a second switch (112) for controlling the current flow of the current flowing through the synchronous step-down converter (11), the synchronous step-down converter (11) being designed to be operated in a first operating mode or in a second operating mode, in the first operating mode of the synchronous step-down converter (11) the current flowing through the synchronous step-down converter (11) alternately rising and falling, the synchronous step-down converter (11) being designed such that, in the first operating mode, the current flowing through the synchronous step-down converter (11) rises as a result of the first switch (111) being switched on and the second switch (112) being switched off and falls as a result of the first switch (111) being switched off and the second switch (112) being switched on, and, in the second operating mode, the current profile of the current flowing through the synchronous step-down converter (11) decaying over a predetermined time period,
the synchronous step-down converter (11) being designed such that, in the second operating mode, the first switch (111) and the second switch (112) are switched off,
the synchronous step-down converter (11) being designed to change from the second operating mode into the first operating mode after the predetermined time period has elapsed,
**characterized in that**
the synchronous step-down converter (11) is designed to change from the first operating mode into the second operating mode when the current in the first operating mode rises and reaches the zero line or when the current in the first operating mode rises and has a predetermined distance from the zero line, and
further **characterized in that**
the predetermined time period is predetermined by a predetermined number of decay cycles.

2. The synchronous step-down converter (11) according to claim 1, wherein, in the first operating mode, when the current falls, the current initially falls towards zero and then flows in a negative direction.

3. The synchronous step-down converter (11) according to either of the preceding claims, wherein after a change from the second operating mode into the first operating mode, the current flowing through the synchronous step-down converter (11) rises.

4. The synchronous step-down converter (11) according to any of the preceding claims, wherein when changing from the first operating mode into the second operating mode, the first switch (111) is switched off.

5. The synchronous step-down converter (11) according to any of the preceding claims, wherein when changing from the second operating mode into the first operating mode, the first switch (111) is switched on.

6. The synchronous step-down converter (11) according to any of the preceding claims, wherein, in the first operating mode, the current flowing through the synchronous step-down converter (11) rises up to a first limit value and/or falls down to a second limit value, or wherein, in the first operating mode, the current flowing through the synchronous step-down converter (11) rises until a first time period has elapsed and/or falls until a second time period has elapsed.

7. The synchronous step-down converter (11) according to any of the preceding claims, wherein the synchronous step-down converter (11) is designed to be connected to the one or more lighting means (13) and, when connected to the one or more lighting means (13), is designed to supply the one or more lighting means (13) with the current flowing through the synchronous step-down converter (11).

8. The synchronous step-down converter (11) according to any of the preceding claims, wherein the one or more lighting means (13) comprise one or more light-emitting diodes, LEDs.

9. A method for operating a synchronous step-down converter (11) designed to operate one or more lighting means (13),
the synchronous step-down converter (11) having a first switch (111) and a second switch (112) for controlling the current flow of the current flowing through the synchronous step-down converter (11), the method comprising
operating the synchronous step-down converter (11) in a first operating mode or in a second operating mode, in the first operating mode of the synchronous step-down converter (11) the current flowing through the synchronous step-down converter (11) alternately rising and falling, in the first operating mode the current flowing through the synchronous step-down converter (11) rising as a result of the first switch (111) being switched on and the second switch (112) being switched off and falling as a result of the first switch (111) being switched off and the second switch (112) being switched on, and, in the second operating mode, the current profile of the current flowing through the synchronous step-down converter (11) decaying over a predetermined time period, in the second operating mode the first switch (111) and the second switch (112) being switched off,
changing the synchronous step-down converter (11) from the second operating mode into the first operating mode after the predetermined time period has elapsed,
**characterized by**
changing the synchronous step-down converter (11) from the first operating mode into the second operating mode when the current in the first operating mode rises and reaches the zero line or when the current in the first operating mode rises and has a predetermined distance from the zero line,
and further **characterized in that**
the predetermined time period is predetermined by a predetermined number of decay cycles.

10. An operating device (1) for operating one or more lighting means (13), wherein the operating device (1) has a synchronous step-down converter (11) for operating the one or more lighting means (13), and wherein the synchronous step-down converter (11) is a synchronous step-down converter (11) according to any of claims 1 to 8, wherein the operating device (1) preferably has a controller (12) which is designed to control the synchronous step-down converter (11).

11. The operating device (1) according to claim 10, wherein the controller (12) controls the operation of the synchronous step-down converter (11) in the first operating mode and in the second operating mode, a change of operation of the synchronous step-down converter (11) from the first operating mode into the second operating mode, and a change of operation of the synchronous step-down converter (11) from the second operating mode into the first operating mode.

## Revendications

1. Convertisseur abaisseur synchrone (11) permettant de faire fonctionner un ou plusieurs moyens d'éclairage (13), dans lequel le convertisseur abaisseur synchrone (11) présente un premier commutateur (111) et un second commutateur (112) pour la commande du flux de courant du courant circulant à travers le convertisseur abaisseur synchrone (11), dans lequel le convertisseur abaisseur synchrone (11) est conçu pour fonctionner dans un premier mode de fonctionnement ou dans un second mode de fonctionnement, dans lequel, dans le premier mode de fonctionnement du convertisseur abaisseur synchrone (11), le courant circulant à travers le convertisseur abaisseur synchrone (11) augmente et diminue de manière alternée, dans lequel le convertisseur abaisseur synchrone (11) est conçu de sorte que dans le premier mode de fonctionnement, le courant circulant à travers le convertisseur abaisseur synchrone (11) augmente par le biais d'un allumage du premier commutateur (111) et une extinction du second commutateur (112) et diminue par le biais d'une extinction du premier commutateur (111) et un allumage du second commutateur (112) et dans lequel dans le second mode de fonctionnement, le parcours de courant du courant circulant à travers le convertisseur abaisseur synchrone (11) oscille pendant une période de temps prédéterminée,
dans lequel le convertisseur abaisseur synchrone (11) est conçu de sorte que dans le second mode de fonctionnement, le premier commutateur (111) et le second commutateur (112) sont éteints,
dans lequel le convertisseur abaisseur synchrone (11) est conçu pour passer, après l'expiration de la période de temps prédéterminée, du second mode de fonctionnement au premier mode de fonctionnement
**caractérisé en ce que**
le convertisseur abaisseur synchrone (11) est conçu pour passer du premier mode de fonctionnement au second mode de fonctionnement lorsque le courant dans le premier mode de fonctionnement augmente et atteint la ligne de zéro ou lorsque le courant dans le premier mode de fonctionnement augmente et présente une distance prédéterminée par rapport à la ligne de zéro et
**caractérisé en outre en ce que**
la période de temps prédéterminée est prédéterminée par un nombre prédéterminé de cycles d'oscillation.

2. Convertisseur abaisseur synchrone (11) selon la revendication 1, dans lequel dans le premier mode de fonctionnement, lors de la diminution du courant, le courant diminue d'abord en direction du zéro et circule ensuite dans une direction négative.

3. Convertisseur abaisseur synchrone (11) selon l'une quelconque des revendications précédentes, dans lequel après un passage du second mode de fonctionnement au premier mode de fonctionnement, le courant circulant à travers le convertisseur abaisseur synchrone (11) augmente.

4. Convertisseur abaisseur synchrone (11) selon l'une quelconque des revendications précédentes, dans lequel lors du passage du premier mode de fonctionnement au second mode de fonctionnement, le premier commutateur (111) est éteint.

5. Convertisseur abaisseur synchrone (11) selon l'une quelconque des revendications précédentes, dans lequel lors du passage du second mode de fonctionnement au premier mode de fonctionnement, le premier commutateur (111) est allumé.

6. Convertisseur abaisseur synchrone (11) selon l'une quelconque des revendications précédentes, dans lequel le courant circulant à travers le convertisseur abaisseur synchrone (11) dans le premier mode de fonctionnement augmente jusqu'à une première valeur limite et/ou diminue jusqu'à une seconde valeur limite ou dans lequel le courant circulant à travers le convertisseur abaisseur synchrone (11) dans le premier mode de fonctionnement augmente jusqu'à l'expiration d'une première période de temps et/ou diminue jusqu'à l'expiration d'une seconde période de temps.

7. Convertisseur abaisseur synchrone (11) selon l'une quelconque des revendications précédentes, dans lequel le convertisseur abaisseur synchrone (11) est conçu pour pouvoir être raccordé au ou aux plusieurs moyens d'éclairage (13) et lors de la présence d'un raccordement au ou aux plusieurs moyens d'éclairage (13), est conçu pour alimenter le ou les plusieurs moyens d'éclairage (13) avec le courant circulant à travers le convertisseur abaisseur synchrone (11).

8. Convertisseur abaisseur synchrone (11) selon l'une quelconque des revendications précédentes, dans lequel le ou les moyens d'éclairage (13) comprennent une ou plusieurs diodes électroluminescentes, DEL.

9. Procédé pour faire fonctionner un convertisseur abaisseur synchrone (11), qui est conçu pour faire fonctionner un ou plusieurs moyens d'éclairage (13),
dans lequel le convertisseur abaisseur synchrone (11) présente un premier commutateur (111) et un second commutateur (112) pour commander le flux de courant du courant circulant à travers le convertisseur abaisseur synchrone (11), dans lequel le procédé présente
un fonctionnement du convertisseur abaisseur synchrone (11) dans un premier mode de fonctionnement ou dans un second mode de fonctionnement, dans lequel dans le premier mode de fonctionnement du convertisseur abaisseur synchrone (11), le courant circulant à travers le convertisseur abaisseur synchrone (11) augmente et diminue de manière alternée, dans lequel dans le premier mode de fonctionnement, le courant circulant à travers le convertisseur abaisseur synchrone (11) augmente par un allumage du premier commutateur (111) et une extinction du second commutateur (112) et diminue par une extinction du premier commutateur (111) et un allumage du second commutateur (112) et dans lequel dans le second mode de fonctionnement, le parcours de courant du courant circulant à travers le convertisseur abaisseur synchrone (11) oscille pendant une période de temps prédéterminée, dans lequel dans le second mode de fonctionnement, le premier commutateur (111) et le second commutateur (112) sont éteints,
un passage du convertisseur abaisseur synchrone (11) du second mode de fonctionnement au premier mode de fonctionnement après l'expiration de la période de temps prédéterminée
**caractérisé par**
un passage du convertisseur abaisseur synchrone (11) du premier mode de fonctionnement au second mode de fonctionnement lorsque le courant dans le premier mode de fonctionnement augmente et atteint la ligne de zéro ou lorsque le courant dans le premier mode de fonctionnement augmente et présente une distance prédéterminée par rapport à la ligne de zéro et
et **caractérisé en outre en ce que**
la période de temps prédéterminée est prédéterminée par un nombre prédéterminé de cycles d'oscillation.

10. Appareil de fonctionnement (1) pour faire fonctionner un ou plusieurs moyens d'éclairage (13), dans lequel l'appareil de fonctionnement (1) présente un convertisseur abaisseur synchrone (11) pour faire fonctionner le ou les moyens d'éclairage (13) et dans lequel le convertisseur abaisseur synchrone (11) est un convertisseur abaisseur synchrone (11) selon l'une des revendications 1 à 8, dans lequel de préférence l'appareil de fonctionnement (1) présente une commande (12), qui est conçue pour la commande du convertisseur abaisseur synchrone (11).

11. Appareil de fonctionnement (1) selon la revendication 10, dans lequel la commande (12) du fonctionnement du convertisseur abaisseur synchrone (11) dans le premier mode de fonctionnement et dans le second mode de fonctionnement commande un passage du fonctionnement du convertisseur abaisseur synchrone (11) du premier mode de fonctionnement au second mode de fonctionnement et un passage du fonctionnement du convertisseur abaisseur synchrone (11) du second mode de fonctionnement au premier mode de fonctionnement.
